# EUROPEAN PATENT SPECIFICATION

(11) **EP 3 081 464 B1**
(45) Date of publication and mention of the grant of the patent: **12.07.2017**
(21) Application number: 15163345.0
(22) Date of filing: 13.04.2015
(51) Int. Cl.: B62H 3/08

(54) **GROUND LOCK APPARATUS**
BODENVERRIEGELUNGSVORRICHTUNG
APPAREIL DE VERROUILLAGE AU SOL

(43) Date of publication of application: 19.10.2016
(73) Proprietor: Southern Taiwan University of Science and Technology, Tainan City 71005 (TW)
(72) Inventor: Chang, Jia-Cheng, 71005 Tainan City (TW); Hsu, Hsing-Yu, 71005 Tainan City (TW); Cin, Siou-Huei, 71005 Tainan City (TW); Tseng, Ching-Yu, 71005 Tainan City (TW)
(74) Representative: dompatent von Kreisler Selting Werner - Partnerschaft von Patent- und Rechtsanwälten mbB

(56) References cited:
- JP-A- 2013 032 145
- KR-A- 20120 116 239

## Description

### BACKGROUND

### Technical Field

The invention relates to a ground lock apparatus, in particular, to a ground lock apparatus for locking a wheel of a vehicle.

### Related Art

As rapid increased quantity of motorcycles and cars due to economic development, it has brought traffic congestion and air pollution problems to the living environment. To reduce energy consumption and diminish environmental pollution, governments are eager to promote "sustainable transport" concepts. Among them, because bicycles are light, save energy, comply with environmental requirements and can be sport and fitness tools, in recent years they became green transportations vigorously promoted by government policy. It is hoped that utilization of the bicycles, which is green and causes no pollution, together with public transportation system can lower the usage of cars and motorcycles so as to save energy or reduce air pollution or contribute to other benefits.

KR 20120116239 A, which shows the preamble of claims 1 and 6, discloses a buried type bicycle rack comprising a buried case, a surface plate, an opening and closing unit, and a locking unit. The buried case is buried on the ground in a state where the top thereof is opened. A coupling flange is formed on the upper peripheral of the buried case in a same level as the ground. An insertion hole is formed on the surface plate. A bicycle wheel is inserted in the insertion hole. The surface plate is coupled to the coupling flange by screws. The opening and closing unit is inserted in the opened part of the buried case under the surface plate to open or close the insertion hole according to the insertion of the bicycle wheel. When the locking unit is pressed by the weight of the inserted bicycle wheel, a locking ring is protruded to the top of the surface plate.

JP 2013032145 A discloses an embedded bicycle storage platform, including: an embedded box body with an opened upper part, and with an upper face flush with the ground; a surface plate where an insertion hole is formed for inserting the wheels of the bicycle at the upper part of the embedded box body and an opening/closing plate with one end hinged to the insertion hole and turned is formed and fastened; an elevating/lowering means that normally supports the opening/closing plate so as to close the insertion hole on a bottom of the surface plate, and in which, when the wheels of the bicycle are placed, the opening/closing plate is lowered to open the insertion hole; and a hooking means where a hooking ring, which is fastened to the bottom of the opening/closing plate, and protruded from or withdrawn in the upper part of the surface plate by the elevating/lowering of the opening/closing, is formed.

To park the bicycles orderly in public places, generally, there are adequate bicycle parking spaces by MRT stations, bus stations, schools, offices, markets, shopping streets, libraries, hospitals, financial institutions, sport centers, parks, tourist attractions, etc. for the common people to park bicycles.

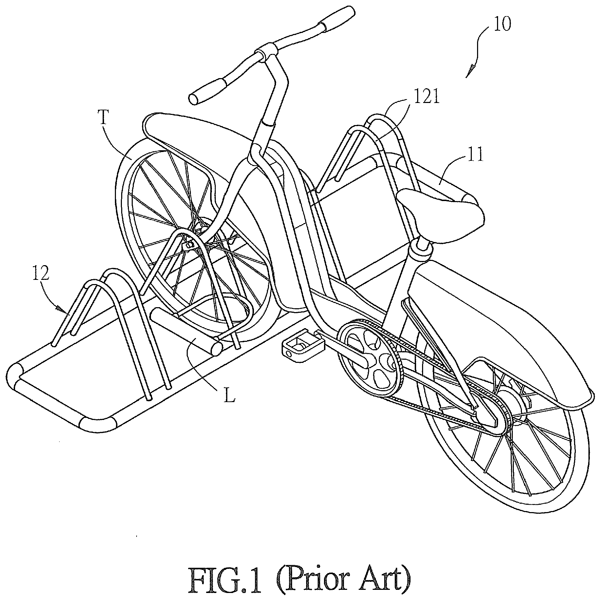

Referring to Fig. 1, the conventional parking rack 10 has a plurality of Sheffield racks 12 on a base 11, each Sheffield racks 12 has two parallel curved rods 121. When parking a bicycle, a user places the front wheel T between the two curved rods 121 of the Sheffield racks 12, and then uses his own lock L to secure one part of the bicycle to the parking rack 10 together so as to finish parking and locking.

However, because the conventional parking rack 10 requires sufficient pavements for installation, it occupies quite large space and reduces available zones for pedestrians. Furthermore, if walking incautiously on foot, a pedestrian may stumble against the parking rack 10 which protrudes from the ground thus getting hurt. In addition, it is really inconvenient that the bicycle user needs to carry his own lock to lock the bicycle on the parking rack 10.

Therefore, it is an important subject to provide a ground lock device which is convenient for the user to lock the bicycle.

### SUMMARY

An objective of the invention is to provide a ground lock apparatus which is convenient for the user to lock the bicycle.

To achieve the above objective, a ground lock apparatus according to the invention is planarly disposed on a ground for locking a wheel of a vehicle. It includes a rotary body, a ditch cover unit and a lock unit. The rotary body has a recess lower than the ground to receive the wheel. The ditch cover unit is connected to the periphery of the opening of the recess. After the wheel falls into the recess and the rotary unit is rotated, part of the lock unit passes through the wheel.

In one embodiment, the rotary body further includes a round cover. The round cover and the ground are substantially flat, and the opening of the recess is located at the round cover.

In one embodiment, the ditch cover unit further includes at least one cover sheet and at least one driving element. The cover sheet is connected to the periphery of the opening of the recess, and the driving element is correspondingly connected to the cover sheet and drives the cover sheet to move.

In one embodiment, the motion of the driven cover sheet includes translation and rotation.

In one embodiment, the lock apparatus further includes a user operation unit coupled to at least one driving element.

In one embodiment, the ditch cover unit includes a support element and at least one cover sheet. When the ditch cover unit covers the recess, the support element protrudes from the opening of the recess and supports the cover sheet.

In one embodiment, the lock unit further includes a first lock element and a second lock element, and the first lock element and/or the second lock element pass through the rotary body.

In one embodiment, the lock apparatus further includes a base. The rotary body is rotated with respect to the base.

In one embodiment, at least one part of the lock unit is disposed on the base.

In one embodiment, the lock unit further includes a first lock element and a second lock element, after the first lock element passes through the wheel, the first lock element and the second lock element engage with each other.

To achieve the above objective, a ground lock apparatus according to the invention for locking a wheel of a vehicle includes a rotary body, a ditch cover unit and a lock unit. The rotary body has a recess. The ditch cover unit is connected to the periphery of the opening of the recess. After the rotary body turns from a first position to a second position, the lock unit engages with the rotary body to prevent the rotary body from returning to the first position.

In one embodiment, the rotary body further includes a round cover. The opening of the recess is located at the round cover.

In one embodiment, the ditch cover unit further includes at least one cover sheet and at least one driving element. The cover sheet is connected to the periphery of the opening of the recess, and the driving element is correspondingly connected to the cover sheet and drives the cover sheet to move.

In one embodiment, the motion of the driven cover sheet includes translation and rotation.

In one embodiment, the lock apparatus further includes a user operation unit coupled to at least one driving element.

In one embodiment, the ditch cover unit includes a support element and at least one cover sheet. When the ditch cover unit covers the recess, the support element protrudes from the opening of the recess and supports the cover sheet.

In one embodiment, the lock unit further includes a first lock element and a second lock element, and the first lock element and/or the second lock element pass through the rotary body.

In one embodiment, the lock apparatus further includes a base. The rotary body is rotated with respect to the base.

In one embodiment, at least one part of the lock unit is disposed on the base.

In one embodiment, the lock unit further includes a first lock element and a second lock element, after the first lock element passes through the wheel, the first lock element and the second lock element engage with each other.

As mentioned above, the ground lock apparatus according to the invention includes the rotatable rotary body and the lock unit. During locking vehicle, the wheel falls into the recess of the rotary body and then the rotary unit turns, so that part of the locking unit passes through the wheel so as to lock the vehicle. It is convenient for the user of the vehicle to no longer carry lock by himself. In addition, because the ground lock apparatus is planarly disposed on the ground, the ground which the ground lock apparatus is disposed on is still substantially flat and it does not protrude from the ground when no vehicle parks. Therefore, pedestrians may walk above the ground lock apparatus and do not fear that they stumbled due to the parking rack. The walking region which pedestrians can walk on is significantly increased, and it is also beneficial to beautify the environment.

### BRIEF DESCRIPTION OF THE DRAWINGS

The embodiments will become more fully understood from the detailed description and accompanying drawings, which are given for illustration only, and thus are not limitative of the present invention, and wherein:
Fig. 1 is a schematic diagram showing the conventional parking rack;
Fig. 2A is a perspective schematic diagram showing the ground lock apparatus according to the first embodiment of the invention;
Fig. 2B is a lateral schematic diagram showing the ground lock apparatus according to the first embodiment of the invention;
Fig. 2C and Fig. 2D are schematic diagrams showing the ground lock apparatus according to the first embodiment of the invention at the first position and the second position;
Fig. 2E is a sectional schematic diagram showing the ground lock apparatus according to the first embodiment of the invention, wherein the cover sheet is open, the wheel is disposed in the recess, and the lock portion of the lock unit protrudes and passes through the wheel;
Fig. 3A is a schematic diagram showing the cooperation of the ground lock apparatus and the user operation unit according to the first embodiment of the invention;
Fig. 3B is a schematic diagram showing the possible decreased distance of the bicycle length after the ground lock apparatus turning to lock according to the first embodiment of the invention;
Fig. 4A is a perspective schematic diagram showing the ground lock apparatus according to the second embodiment of the invention;
Fig. 4B is a lateral schematic diagram showing the ground lock apparatus according to the second embodiment of the invention;
Fig. 4C and Fig. 4D are schematic diagrams showing the ground lock apparatus according to the second embodiment of the invention at the first position and the second position;
Fig. 4E is a sectional schematic diagram showing the ground lock apparatus according to the second embodiment of the invention, wherein the cover sheet is open, the wheel is disposed in the recess, and the lock portion of the lock unit protrudes and passes through the wheel;
Fig. 5A is a perspective schematic diagram showing the ground lock apparatus according to the third embodiment of the invention;
Fig. 5B is a lateral schematic diagram showing the ground lock apparatus according to the third embodiment of the invention;
Fig. 5C is a schematic diagram showing another example of the cover sheet of the ditch cover unit according to the third embodiment of the invention;
Fig. 6A is a perspective schematic diagram showing the ground lock apparatus according to the fourth embodiment of the invention;
Fig. 6B is a sectional schematic diagram showing the ground lock apparatus according to the fourth embodiment of the invention; and
Fig. 7A to Fig. 7C are schematic diagrams showing other examples of the lock unit of the ground lock apparatus according to the fourth embodiment of the invention.

### DETAILED DESCRIPTION OF THE INVENTION

The embodiments of the invention will be apparent from the following detailed description, which proceeds with reference to the accompanying drawings, wherein the same references relate to the same elements.

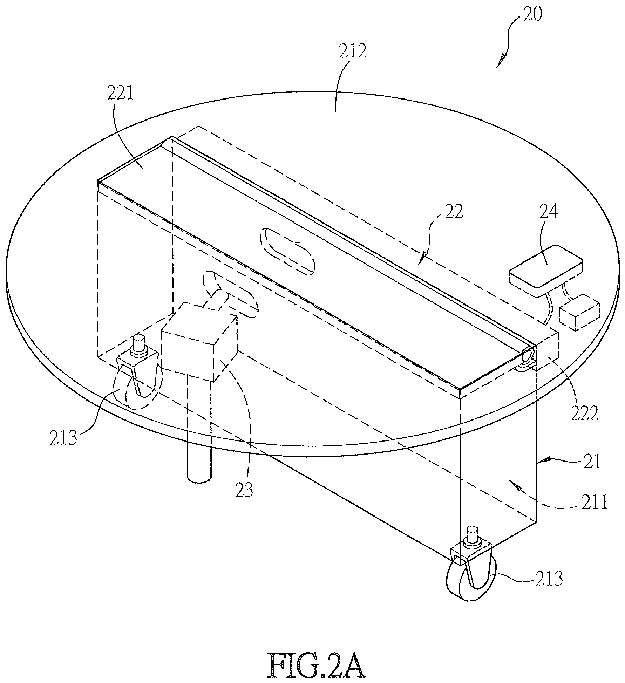

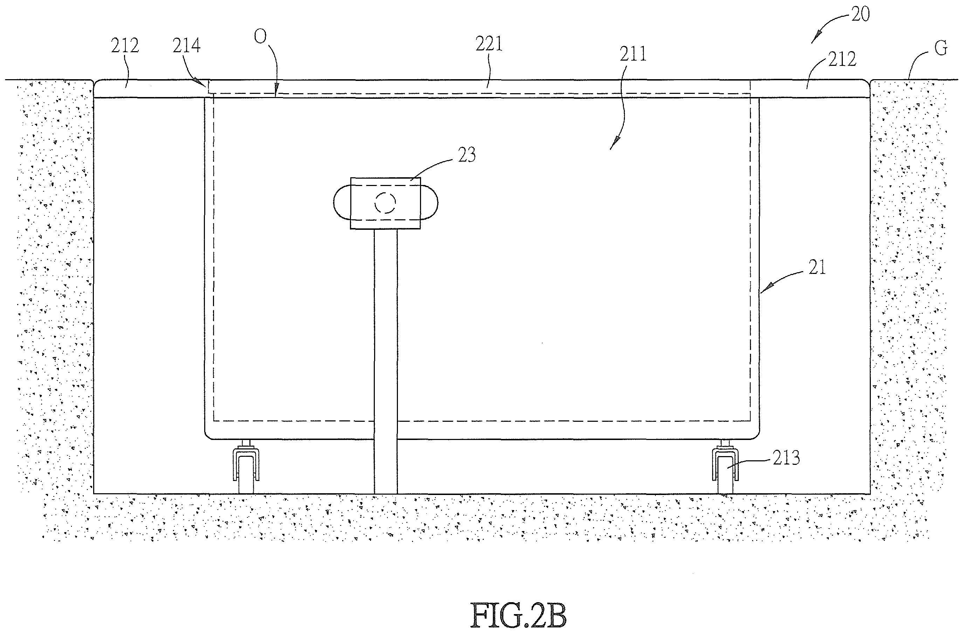

Fig. 2A and Fig. 2B are schematic diagrams showing the ground lock apparatus according to a first embodiment of the invention. Referring to Fig. 2A and Fig. 2B, the ground lock apparatus 20 includes a rotary body 21, a ditch cover unit 22 and a lock unit 23. The ground lock apparatus 20 is planarly disposed on a ground G for locking a wheel W of a vehicle. The ground lock apparatus 20 is embedded into the ground G, and for example, a round hole is dug from the ground G and then the ground lock apparatus 20 is disposed in the hole so that the upper surface of the ground lock apparatus 20 and the ground G are substantially contour and thus the ground lock apparatus does not protrude from the ground and hinder pedestrians. Herein, the ground G can refer to general roadway or pavement, the surface for disposing the ground lock apparatus 20, or the surface on which a user of the ground lock apparatus 20 stands during securing. In addition, the vehicle is a vehicle having the wheel W, and the quantity of the wheel W is at least one. For example, it may be unicycle, bicycle, motorcycle, pedicab, electric vehicle, or carts, etc. The following embodiments take one wheel W of the bicycle to be secured for example.

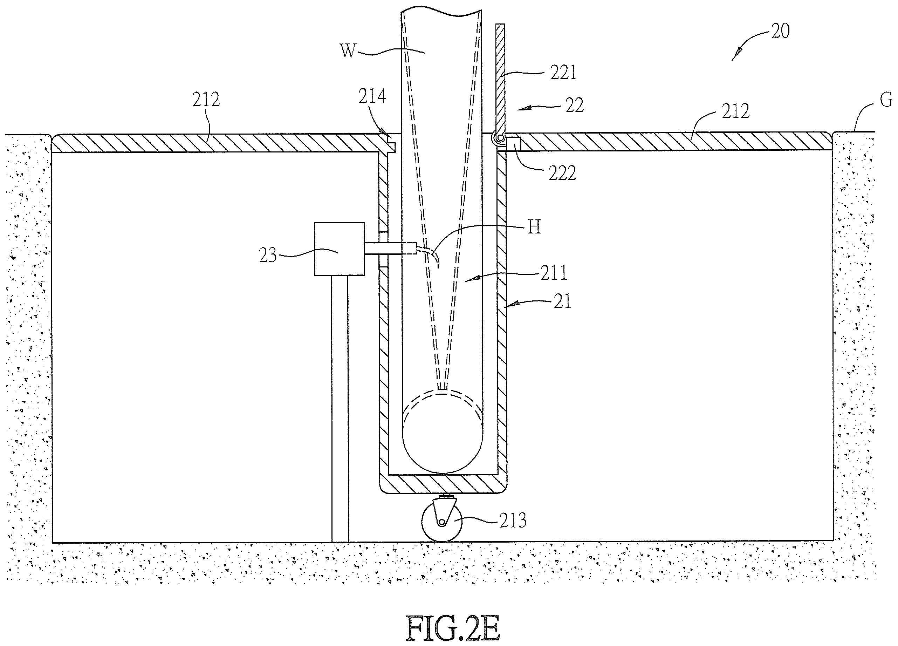

The rotary body 21 has a recess 211 lower than the ground G, and it can be an accommodation space for the wheel W during falling and securing. It is noted that the depth of the recess 211 is required to be larger than or equal to the distance between the outer diameter of the wheel W and the void portion of the rim. In the embodiment, the rotary body 21 is a rectangle case for example. The rotary body 21 further includes a round cover 212 and at least one trolley wheel 213. The round cover 212 is connected to the rectangle case and it is rotated synchronously together with the rotary body 21. The round cover 212 and the ground G are substantially flat, and its round shape is required for the rotation of the rotary body 21. In addition, the opening O of the recess 211 is a form of an elongated shape opening O (herein is a rectangle for example), and it is the place which the wheel W falls into (as shown in Fig. 2E). Herein, the shape of the recess 211 substantially matches up with the required space which the wheel W falls into. The opening O is located at the round cover 212. The round cover 212 may fully cover the opening O (Fig. 2A), or the opening O may be located at any portion of the round cover 212 even that it may be disposed on the periphery of the round cover 212. Furthermore, the rotary body 21 may have other shapes, it is not specially limited thereto.

The ditch cover unit 22 is connected to the periphery of the opening O of the recess 211. The ditch cover unit 22 further includes at least one cover sheet 221 and at least one driving element 222. In Fig. 2A the quantity of the cover sheet 221 is one for example. The cover sheet 221 is connected to and pivot on the periphery of one long side of the opening O of the recess 211. The cover sheet 221 may be connected to the periphery of the opening O by a pivot. A restoring force resulting from a torsion of the pivot may apply to the cover sheet 221 so as to restore a close position that the cover sheet 221 covers the recess 211. The shape of the cover sheet 221 substantially matches up with the shape of the opening O, and it covers the opening O. The periphery of the opening O has at least one support section 214 (for example a notch) to support the cover sheet 221. It is noted that the upper surface of the cover sheet 221 of the ditch cover unit 22 is also one portion of the upper surface of the ground lock apparatus 20, and thus the upper surface of the cover sheet 221 and the ground G are substantially equally flat. The driving element 222 is correspondingly connected to the cover sheet 221 and drives the cover sheet 221 to move. For example, the driving element 222 is a combination of a motor and gears, etc. to drive the cover sheet 221 to move. The motion of the driven cover sheet 221 includes translation and rotation. For example, the cover sheet 221 is opened by rotating here.

The lock unit 23 is disposed on one side of the rotary body 21. For example, it can be fixed to the hole wall which ground lock apparatus 20 is disposed on. The lock unit 23 may be a lock cylinder, a lock plate, or an electronic lock (for example an electric drop bolt). Here, the lock unit 23 is illustrated as an electric drop bolt which is able to stretch based on electric control, namely, it receives driving signal to protrude or retract. The body 21 has a through hole located at its portion corresponding to the lock unit 23, so that the protruded lock portion of the lock unit 23 is able to pass through the rotary body 21 and then reach the recess 211.

Referring to Fig. 2A to Fig. 3B to illustrate the operation of the ground lock apparatus. The ground lock apparatus 20 further includes a user operation unit 24 coupled to the driving element 222 to control the driving element 222 to drive the cover sheet 221 to be open or closed. The coupling may be implemented by signals to drive and control through wire or wireless. Herein, the user operation unit 24 may be also planarly disposed on the ground, and only the interface of the user operation unit 24 is exposed from the ground G for the user to operate. On a condition that the ground lock apparatus 20 is bought for personal use, the user operation unit 24 may be simply configured to control the driving element 222 to drive or not. The user may manually operate or use identification element to identify his identity by the user operation unit 24 so as to open the cover sheet 221, or he may input password directly on the user operation unit 24 to open the cover sheet 221. Following description takes the cooperation of the ground lock apparatus 20 and the rental system of public bicycle for example to illustrate the operation of the ground lock apparatus 20. However, the service of the rental system of public bicycle is not the main feature of the invention, it is illustrated for example here but not limited to the application of the invention.

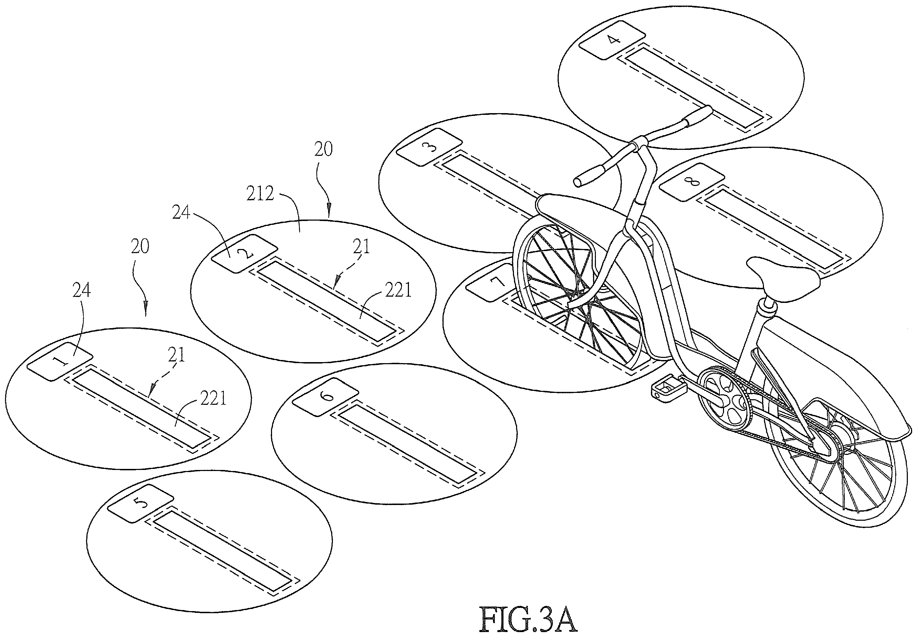

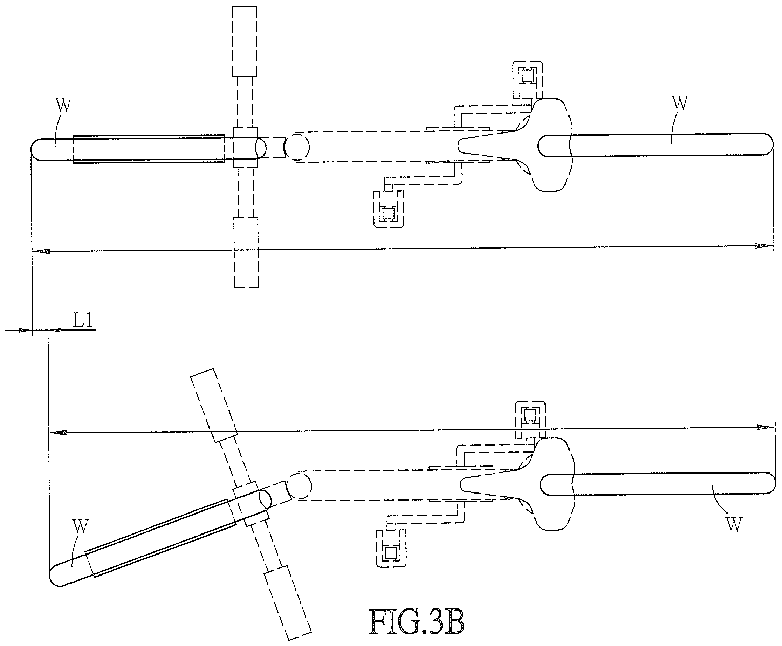

Referring to Fig. 2A to Fig. 3B, Fig. 3B illustrates that a rental system of public bicycle cooperates with a plurality of rental stations, each rental station is provided with a plurality of bicycles, and each bicycle can be provided with a bicycle identification element to record its belonged rental station number, lock number, use time, or identification code, etc. Fig. 3A is a schematic diagram showing that a rental station includes a plurality of bicycles and a plurality of ground lock apparatuses. The rental system of public bicycle may include a remote management server, a plurality of central control unit installed on each rental station, and a plurality of the operation units 24 electrically connected to each corresponding central control unit. A bicycle user only needs to buy a prepaid card (not shown) which records a built-in card number, user identity information and prepaid amount. When the user give the rent bicycle back, he only needs to take his prepaid card and let it sensed closely by the user operation unit 24 of the ground lock apparatus 20 which corresponds to the bicycle. After successful identification, the user operation unit 24 accordingly drives the driving element 222 to open cover sheet 221.

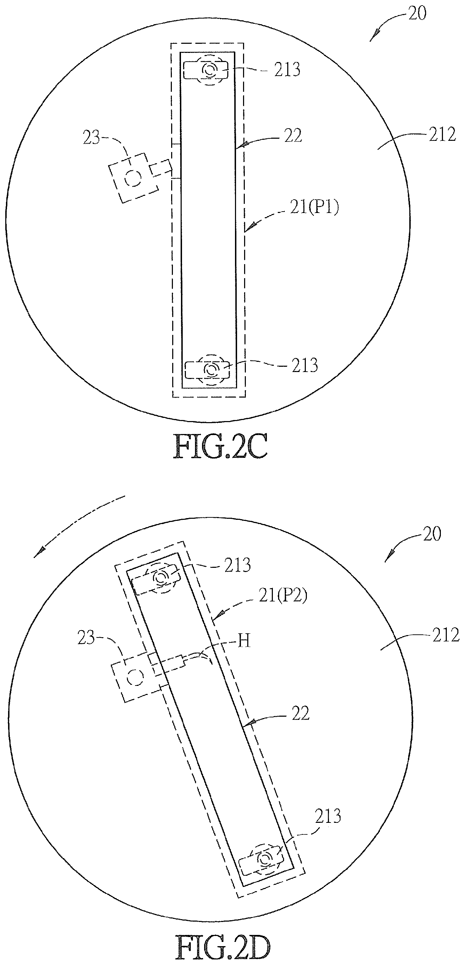

Referring to Fig. 2C to Fig. 2E, when the cover sheet 221 is at an open state, the user can push one wheel W (for example the front wheel) of the bicycle to slide into the recess 211 from the opening O. Then he turns the stem of the bicycle to rotate the rotary body 21. Because two trolley wheels 213 are installed under the rotary body 21, the rotary body 21 turns to a second position P2 from a first position P1 with respect to the ground when turning the stem. The rotated angle is smaller than 90 degree so as to keep the bicycle body parked stably and convenience for users. After turning, the lock unit 23 can be driven according to the user operation unit 24 (for example, after finishing identification quite a time period, the lock unit 23 begins to secure) or be driven by rotating the rotary body 21 or operated manually by the user, so as to protrude the lock portion of the lock unit 23 and then pass through the wheel W for limiting the movement of the wheel W.

From Fig. 2D, the lock unit 23 may be a lock having a hook H. When the lock with the hook H passes through the wheel W, the wheel W accordingly is not able to move upwards (toward direction Z). In the embodiment, the lock unit 23 may turn 90 degrees to block the wheel W from moving at XY directions or engage with the rotary body 21, so that the rotary body 21 does not return to the first position P1. Furthermore, there are other methods of preventing the wheel W from driving the rotary body 21 to return to the first position P1, and they will be illustrated with examples below. In addition, when the user wants to unlock the bicycle, the user operation unit 24 accordingly drives the lock unit 23 to unlock on the condition that the identification by the user operation unit 24 is correct. After the lock portion of the lock unit 23 retracts, the user can turn the rotary body 21 from the second position P1 back to the first position P1, and then pull the wheel W of the bicycle from the recess 211. Accordingly, the user can take the bicycle out and use it.

As to the previous mentioned action of turning to lock, it is quite convenient for the bicycle user because he no longer needs to carry an extra lock by himself. In addition, because the ground lock apparatus 20 is planarly disposed on the ground G, the ground G which the ground lock apparatus 20 is disposed on is still flat and the ground lock apparatus 20 substantially does not protrude from the ground G when no bicycle parks. Therefore, pedestrians may walk above the ground lock apparatus and do not fear that they stumbled due to the parking rack. The walking region which pedestrians can walk on is significantly increased, and it is beneficial to beautify the environment.

Referring to Fig. 3A to Fig. 3B, they illustrate that a user operation unit 24 is disposed by the ground lock apparatus 20 in one-to-one control for example. In addition, the user operation unit 24 is also planarly disposed on the ground, and only the interface of the user operation unit 24 is exposed from the ground G for the user to operate. In the rental station having a plurality of ground lock apparatuses 20, because the ground lock apparatus 20 is locked by turning, the stem of the bicycle deflects at an angle with respect to the long axis of the bicycle body during securing. Therefore, the bicycle length is decreased with the length L1 so as to reduce the necessary parking distance and increase the available space of the rental stations.

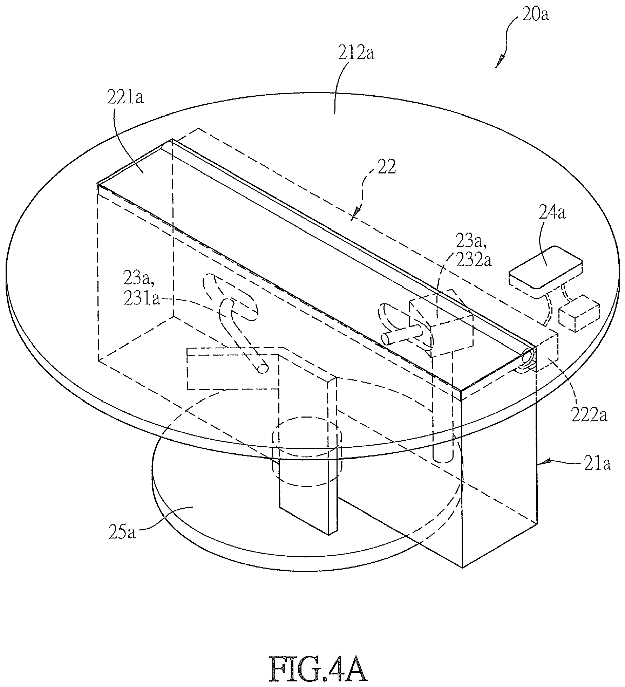

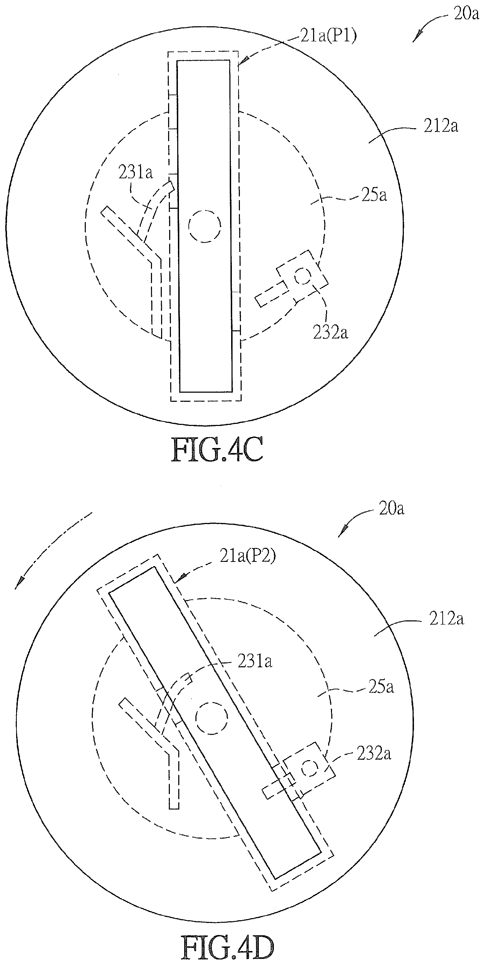

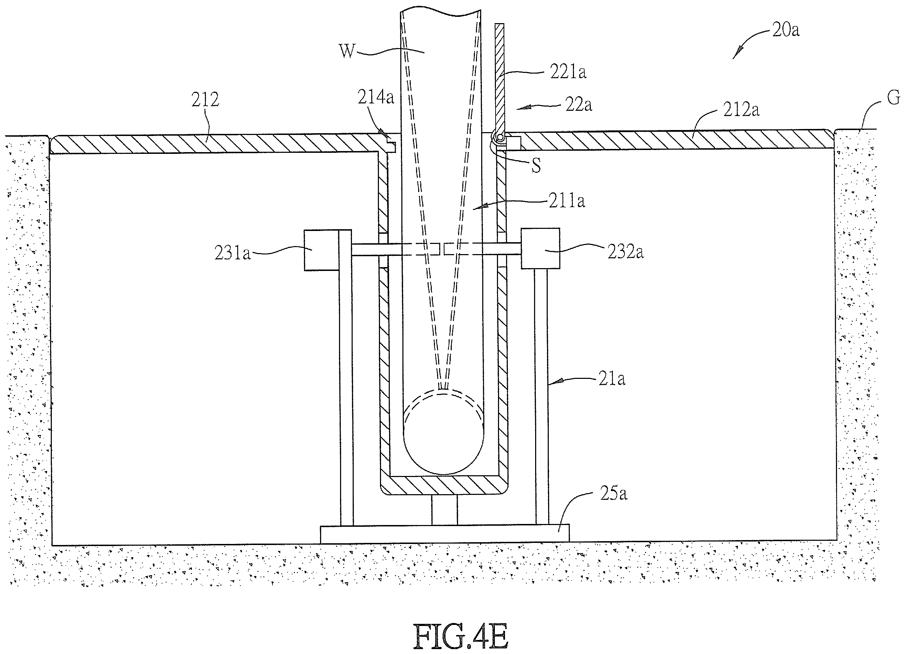

Then, referring to Fig. 4A to Fig. 4E to illustrate the ground lock apparatus of the second embodiment of the invention, the ground lock apparatus 20a includes a rotary body 21a, a ditch cover unit 22a and a lock unit 23a. The difference from the previous embodiment is that the ground lock apparatus 20a in the embodiment further includes a base 25a. The base 25a may has a bearing assembly. The rotary body 21a is disposed on the bearing assembly of the base 25a to rotate with respect to the base 25a. Naturally, the bearing assembly may be a component belonging to the rotary body 21a. The rotary body 21a is rotated relatively to the base 25a by the bearing assembly.

Besides, the lock unit 23a of the ground lock apparatus in the embodiment includes a first lock element 231a and a second lock element 232a for example. At least one of the first lock element 231a and the second lock element 232a may be disposed on the base 25a. Herein, for example, both the first lock element 231a and the second lock element 232a are disposed on the base 25a. Alternatively, at least one of the first lock element 231a or the second lock element 232a may be disposed on the ground G or connected to the round cover 212a, and they are not limited thereto. The first lock element 231a is a lock cylinder or a lock plate. It may be slightly elastic or its front end has a lead angle thus gliding over the obstacle instead of jamming the rim or spokes. The first lock element 231a may not have the ability to stretch to reduce the cost. The second lock element 232a may be still an electronic lock, for example, an electric drop bolt, and it may be operated manually by the user or driven by the user operation unit 24a to secure. It is noted that the rotary body 21a, the ditch cover unit 22, the lock unit 23a and the base 25a of the ground lock apparatus 20a in the embodiment may be cooperated with the ground lock apparatuses in any embodiments, and they are not limited thereto here.

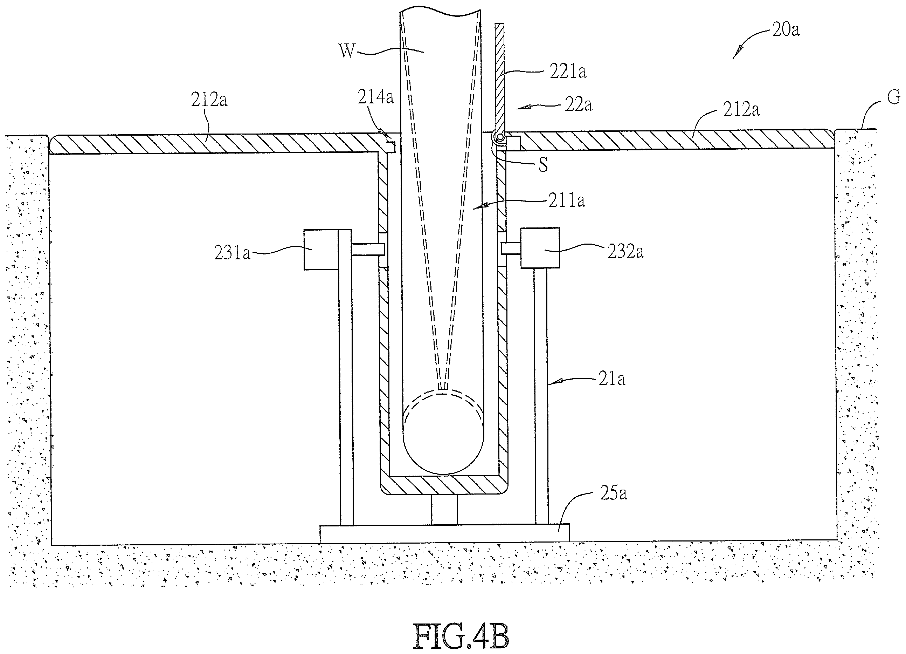

Referring to Fig. 4B to Fig. 4E, when the user parks the bicycle to secure, the cover sheet 221 is accordingly driven at an open state and a stop element S which is disposed in the driving element 222a stops the cover sheet 221a to cover the recess 211a after the identification by the user operation unit 24 is correct. Then, the user can push one wheel W (for example the front wheel) of the bicycle to slide into the recess 211 from the opening O. Then he turns the stem of the bicycle to rotate the rotary body 21a with respect to the base 25a from the first position P1 to the second position P2. The rotated angle is smaller than 90 degree so as to keep the bicycle body parked stably. After turning, the first lock element 231a which does not have ability of stretching accordingly passes through the rotary body 21a and then passes through the wheel W thus limiting the movement of the wheel toward Z direction. Then the lock unit 23a can be driven according to the user operation unit 24 (for example, after finishing identification quite a time period, the lock unit 23a begins to secure) or be driven manually by the user, so as to protrude the second lock element 232a to pass through the rotary body 21a and then pass through the wheel W for limiting the movement of the wheel W toward another direction, or so as to engage with the rotary body 21a by the second lock element 232a. Accordingly, the rotary body 21a is not able to rotate and thus finishing securing the bicycle. It is noted that because the rotary body 21a is passed through by the first lock element 231a and the second lock element 232a, the rotary body 21a has through holes on its walls respectively corresponding to the first lock element 231a and the second lock element 232a. Alternatively, if the rotary body 21a itself has sidewalls of hollow structure, the first lock element 231a and the second lock element 232a can directly pass through.

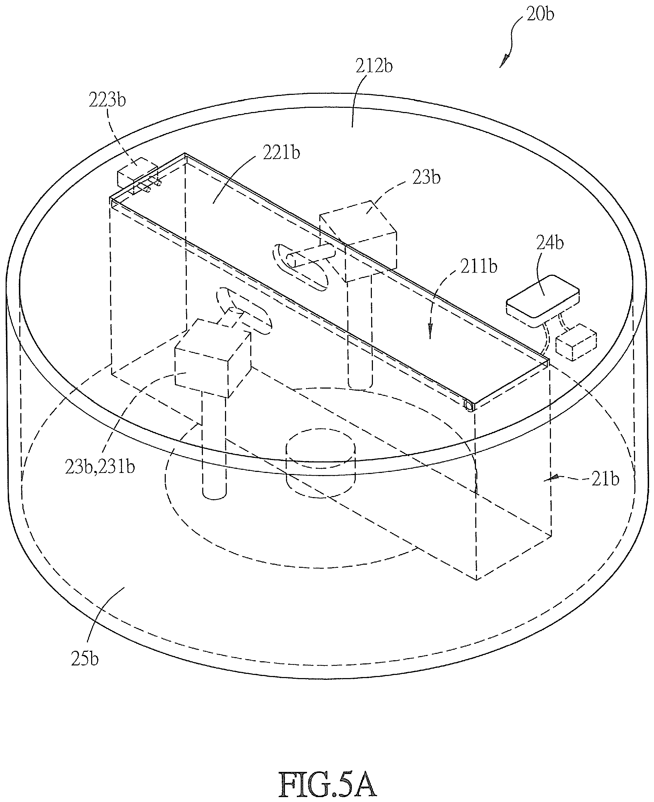

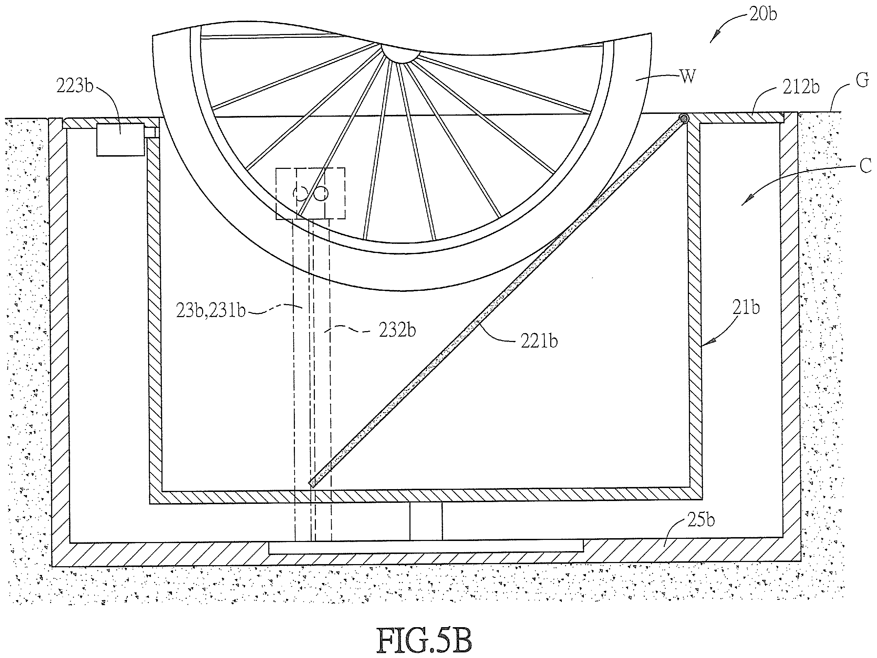

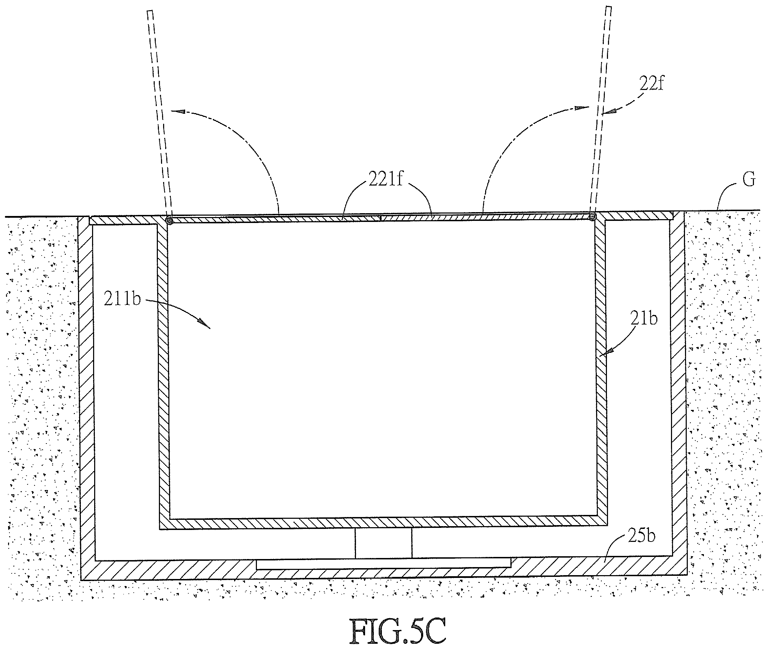

Then, referring to Fig. 5A to Fig. 5C to illustrate the ground lock apparatus of the third embodiment of the invention, the ground lock apparatus 20b includes a rotary body 21b, a ditch cover unit 22b and a lock unit 23b. The difference from the previous embodiment is that the ditch cover unit 22b in the embodiment further includes a support element 223b disposed on the periphery of the opening O. When the cover sheet 221b covers the recess 211b, the support element 223b protrudes from the opening O of the recess 211b to support the cover sheet 211b. When the cover sheet 211b is at open state, the support element 223b retracts to avoid blocking the wheel W. The support element 223b may be an electronic lock. Herein, the driving of the support element 223b may be controlled by the manual operation of the user or by the user operation unit 24b. In addition, the cover sheet 221b of the ditch cover unit 22b pivots on the short side of the rotary body 21b. When the support element 223b retracts and presses downwards due to the weight of the wheel W, one end of the cover sheet 221b falls down and then contacts the rotary body 21b, and it and the bottom surface of the rotary body 21b form an included angle θ. Therefore, when falling into the recess 211b, the wheel W rests on the cover sheet 221b so that the wheel W will not directly fall into the bottom surface of the rotary body 21b. During rain, it is beneficial for the wheel W to avoid rust due to gathered water. Referring to Fig. 5C, the ditch cover unit 22b may have two cover sheets 221b hinged on the opposite sides, and the two cover sheets 221b may pivot on the long side or short side of the periphery of the opening O.

Besides, the ground lock apparatus 20b in the embodiment further has a base 25b having a round accommodation space C which the rotary body 21b is disposed in. In addition, for example, the lock unit 23b includes a first lock element 231b and a second lock element 232b. At least one of the first lock element 231b or the second lock element 232b may be disposed on the base 25b, and the other one may be disposed on the ground. Herein, for example, both the first lock element 231b and the second lock element 232b are disposed on the base 25b and located respectively on two sides of the rotary body 21b. Alternatively, at least one of the first lock element 231b or the second lock element 232b may be disposed on the ground G or the round cover 212b, and they are not limited thereto. Both the first lock element 231b and the second lock element 232b are electronic locks, for example, electric drop bolts, and they may be operated manually by the user or driven by the user operation unit 24a to secure. The two protruded lock portions of the first lock element 231b and the second lock element 232b each has a long axis, and the long axes form an included angle.

Referring to Fig. 5C, it illustrates another example of the cover sheet of the ditch cover unit, and it shows two cover sheets 221f connected to the periphery of the opening. The cover sheets 221 each pivots on the periphery of the opening by a pivot. The driving element 222b turns the two cover sheets 221f upwards to expose the recess 211b. It is noted that the rotary body 21b, the ditch cover unit 22f and the base 25b of the ground lock apparatus 20b in the embodiment may be cooperated with the ground lock apparatuses in any embodiments, and they are not limited thereto here.

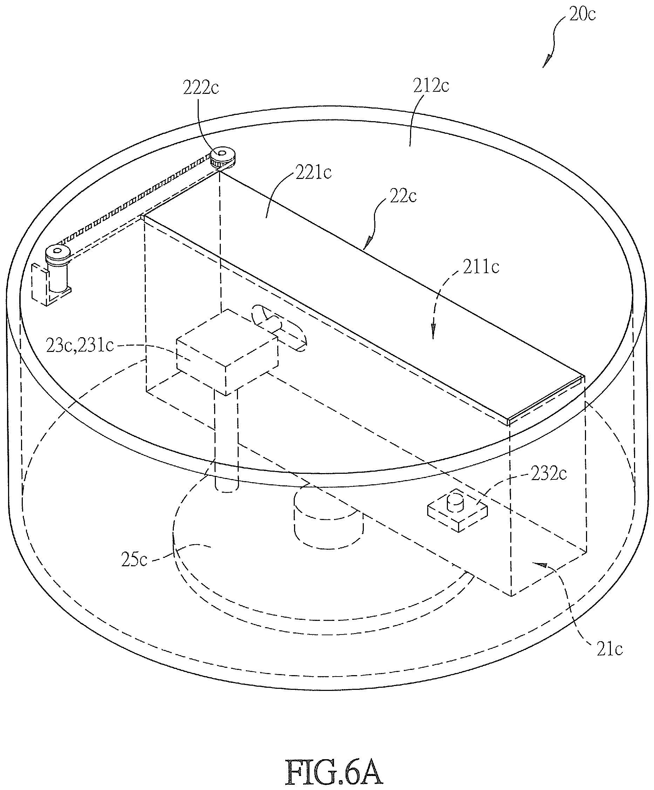

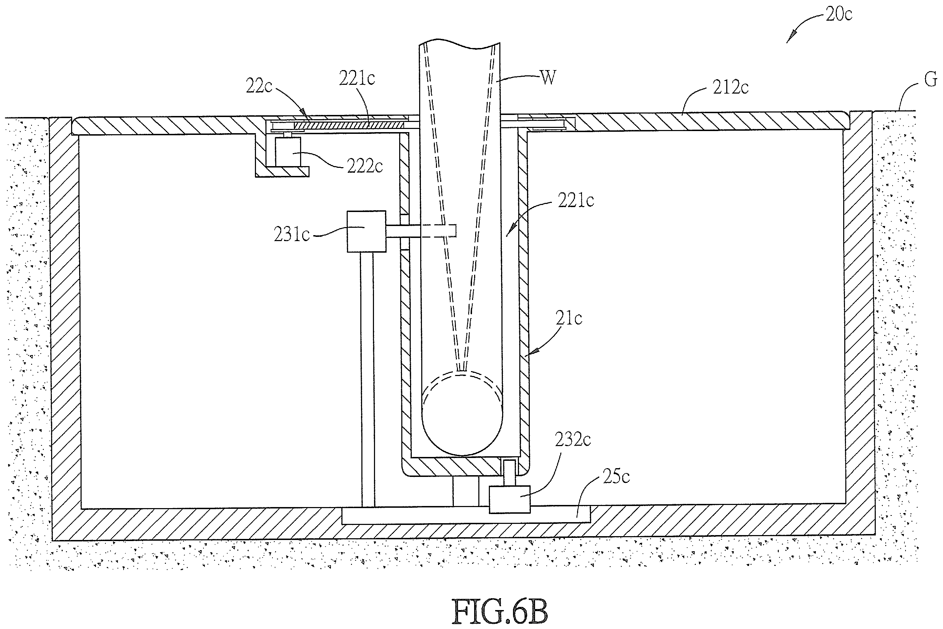

Then, referring to Fig. 6A to Fig. 6B to illustrate the ground lock apparatus of the fourth embodiment of the invention, the ground lock apparatus 20c includes a rotary body 21c, a ditch cover unit 22c and a lock unit 23c. The difference from the previous embodiment is that the cover sheet 221c of the ditch cover unit 22c in the embodiment is driven by the driving element 222c, and it moves by horizontal translation parallel to the roadway or pavement to open or close the recess 211c. The driving element 222c has a motor, gears, a rack and pinion, etc. They are driven by the motor to drive the cover sheet 221c to move horizontally. In addition, the round cover 212c has an extension portion extending downwards. An included angle between the extension portion and the upper surface of the round cover 212c is substantially 90 degrees so as to protect the inner components of the ground lock apparatus 20c from the pollution of the environment.

Besides, the lock unit 23c in the embodiment has a first lock element 231c and a second lock element 232c. Both of the first lock element 231c and the second lock element 232c are disposed on the base 25c, but the first lock element 231c and the second lock element 232c respectively correspond to the adjacent surfaces of the rotary body 21c, for example, the lateral surface and the bottom surface. During securing, the first lock element 231c passes through the rotary body 21c and then engages with the wheel W thus preventing the wheel W from moving out. The second lock element 232c passes through the bottom surface of the rotary body 21c to limit the rotation of the rotary body 21c with respect to the base 25c and to limit the movement of the wheel W, so as to finish securing so that the rotary body 21c will not return to the first position P1. Alternatively, at least one of the first lock element 231c or the second lock element 232c may be disposed on the ground G or the round cover 212c.

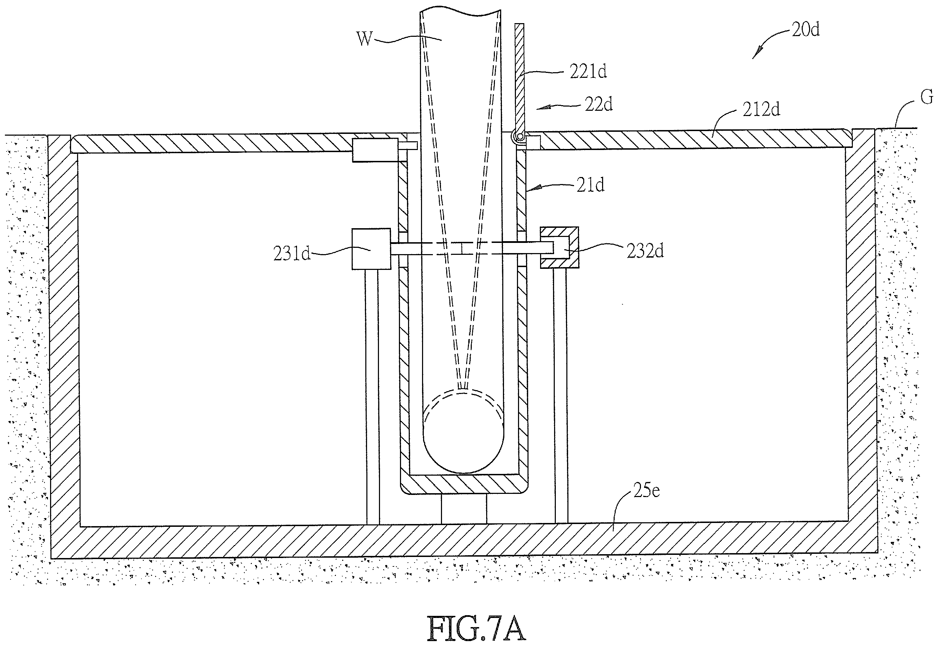

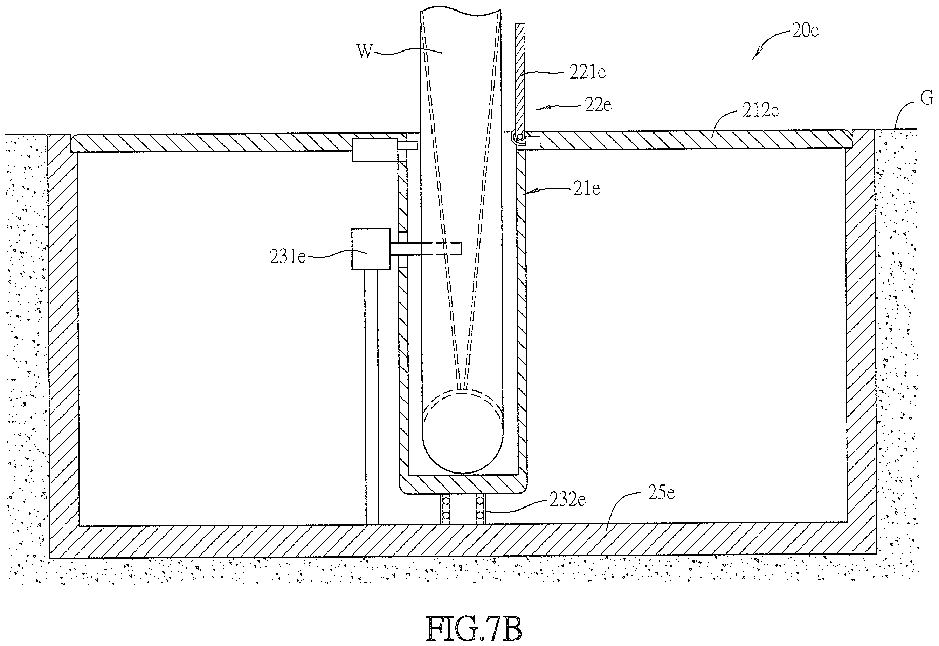

Referring to Fig. 7A and Fig. 7B to illustrate other examples of the lock unit of the ground lock apparatus. As shown in Fig. 7A, in the ground lock apparatus 20d, the lock unit 23d includes a first lock element 231d and a second lock element 232d respectively disposed on two opposite sides of the rotary body 21d. Alternatively, at least one of the first lock element 231d or the second lock element 232d may be disposed on the ground G or the round cover 212c. The difference is that the second lock element is an engaging element and it is a structure which does not have a stretchable lock portion. When the rotary body 21d is at the second position P2, the first lock element 231d passes through one sidewall of the rotary body 21d and the wheel W. After also passing through the other sidewall of the rotary body 21d, the first lock element 231d accordingly engages with the second lock element 232d. The second lock element 232d may be an engaging element having a recess, and the protruded lock portion of the first lock element 231d matches up with the recess of the second lock element 232d. Therefore, the first lock element 231d and the second lock element 232d can limit the rotation of the rotary body 21d with respect to the base 25d and limit the movement of the wheel W, so that the rotary body 21d will not return to the first position P1 and thus finishing securing.

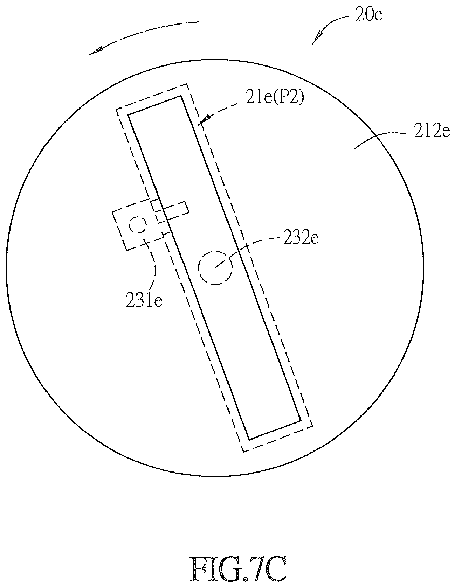

Referring to Fig. 7B and Fig. 7C, in order to limit the rotation of the rotary body 21e with respect to the base 25e and limit the movement of the wheel W by the ground lock apparatus 20e, the lock unit 23e includes a first lock element 231e and a second lock element 232e. The first lock element 231e is an electronic lock for example. The second lock element 232e is disposed in the bearing which applies to the rotary body 21e rotating with respect to the base 25e. Alternatively, the first lock element 231e may be disposed on the ground G or the round cover 212e. When the ground lock apparatus 20e is securing, the first lock element 231e protrudes to pass through the rotary body 21e and the wheel W after the rotary body 21e turns from the first position P1 to the second position P2. In addition, the second lock element 232e secures the relative position between the rotary body 21e and the base 25e, so that the rotary body 21e is not rotatable with respect to the base 25e and the rotary body 21e can not return to the first position P1 thus finishing securing.

Another ground lock apparatus for locking a wheel of a vehicle according to the invention is also disclosed. The ground lock apparatus includes a rotary body, a ditch cover unit and a lock unit. The rotary body has a recess. The ditch cover unit is connected to the periphery of the opening of the recess. After the rotary body turns from a first position to a second position, the lock unit engages with the rotary body to prevent the rotary body from returning to the first position. Because the technique features and related connection relationships of the rotary body, the ditch cover unit and the lock unit have been illustrated and explained in the previous embodiments, and thus they are not repeated here again.

It is noted that, in addition, various examples of each element, each component or each unit in all embodiments can be alternatively utilized in each embodiments, and they are not limited to the examples as mentioned in the above embodiments.

As mentioned above, the ground lock apparatus according to the invention includes the rotatable rotary body and the lock unit. During locking vehicle, the wheel falls into the recess of the rotary body and then the rotary unit turns, so that part of the locking unit passes through the wheel so as to lock the vehicle. It is convenient for the user of the vehicle to no longer carry lock by himself. In addition, because the ground lock apparatus is planarly disposed on the ground, the ground which the ground lock apparatus is disposed on is still substantially flat and it does not protrude from the ground when no vehicle parks. Therefore, pedestrians may walk above the ground lock apparatus and do not fear that they stumbled due to the parking rack. The walking region which pedestrians can walk on is significantly increased, and it is also beneficial to beautify the environment.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A ground lock apparatus (20, 20a, 20b, 20c, 20d, 20e), planarly disposed on a ground for locking a wheel of a vehicle, **characterized by** comprising:
a rotary body (21, 21a, 21b, 21c, 21d, 21e), having a recess (211, 211a, 211b, 211c) lower than the ground to receive the wheel;
a ditch cover unit (22, 22a, 22b, 22c, 22d), connected to the periphery of an opening of the recess (211, 211a, 211b, 211c); and
a lock unit (23, 23a, 23b, 23c, 23d, 23e), configured such that a part of the lock unit (23, 23a, 23b, 23c, 23d, 23e) passes through the wheel after the wheel falls into the recess (211, 211a, 211b, 211c) and the rotary unit is rotated,.

2. The ground lock apparatus (20, 20a, 20b, 20c, 20d, 20e) of claim 1, wherein the rotary body (21, 21a, 21b, 21c, 21d, 21e) further comprises a round cover (212, 212a, 212b, 212c, 212e), the round cover (212, 212a, 212b, 212c, 212e) and the ground surface are substantially flat, and the opening of the recess (211, 211a, 211b, 211c) is located at the round cover (212, 212a, 212b, 212c, 212e).

3. The ground lock apparatus (20, 20a, 20b, 20c, 20d, 20e) of claim 1, wherein the ditch cover unit (22, 22a, 22b, 22c, 22d) further comprises at least one cover sheet (221, 221b, 221c, 221f) and at least one driving element (222, 222a, 222b, 222c), the cover sheet (221, 221b, 221c, 221f) is connected to the periphery of the opening of the recess (211, 211a, 211b, 211c), and the driving element (222, 222a, 222b, 222c) is correspondingly connected to the cover sheet (221, 221b, 221c, 221f) and drives the cover sheet (221, 221b, 221c, 221f) to move.

4. The ground lock apparatus (20, 20a, 20b, 20c, 20d, 20e) of claim 1, wherein the lock unit (23, 23a, 23b, 23c, 23d, 23e) further comprises a first lock element (231a, 231b, 231c, 231d, 231e) and a second lock element (232a, 232b, 232c, 232d, 232e), and the first lock element (231a, 231b, 231c, 231d, 231e) and/or the second lock element (232a, 232b, 232c, 232d, 232e) pass through the rotary body (21, 21a, 21b, 21c, 21d, 21e).

5. The ground lock apparatus (20, 20a, 20b, 20c, 20d, 20e) of claim 1, further comprising:
a base, the rotary body (21, 21a, 21b, 21c, 21d, 21e) being rotated with respect to the base (11).

6. A ground lock apparatus (20, 20a, 20b, 20c, 20d, 20e), for locking a wheel of a vehicle, **characterized by** comprising:
a rotary body (21, 21a, 21b, 21c, 21d, 21e), having a recess (211, 211a, 211b, 211c) to receive the wheel;
a ditch cover unit (22, 22a, 22b, 22c, 22d), connected to the periphery of an opening of the recess (211, 211a, 211b, 211c); and
a lock unit (23, 23a, 23b, 23c, 23d, 23e), wherein after the rotary body (21, 21a, 21b, 21c, 21d, 21e) turns from a first position to a second position, the lock unit (23, 23a, 23b, 23c, 23d, 23e) engages with the rotary body (21, 21a, 21b, 21c, 21d, 21e) to prevent the rotary body (21, 21a, 21b, 21c, 21d, 21e) from returning to the first position.

7. The ground lock apparatus (20, 20a, 20b, 20c, 20d, 20e) of claim 6, wherein the rotary body (21, 21a, 21b, 21c, 21d, 21e) further comprises a round cover (212, 212a, 212b, 212c, 212e), and the opening of the recess (211, 211a, 211b, 211c) is located at the round cover (212, 212a, 212b, 212c, 212e).

8. The ground lock apparatus (20, 20a, 20b, 20c, 20d, 20e) of claim 6, wherein the ditch cover unit (22, 22a, 22b, 22c, 22d) further comprises at least one cover sheet (221, 221b, 221c, 221f) and at least one driving element (222, 222a, 222b, 222c), the cover sheet (221, 221b, 221c, 221f) is connected to the periphery of the opening of the recess (211, 211a, 211b, 211c), and the driving element (222, 222a, 222b, 222c) is correspondingly connected to the cover sheet (221, 221b, 221c, 221f) and drives the cover sheet (221, 221b, 221c, 221f) to move.

9. The ground lock apparatus (20, 20a, 20b, 20c, 20d, 20e) of claim 6, wherein the lock unit (23, 23a, 23b, 23c, 23d, 23e) further comprises a first lock element (231a, 231b, 231c, 231d, 231e) and a second lock element (232a, 232b, 232c, 232d, 232e), and the first lock element (231a, 231b, 231c, 231d, 231e) and/or the second lock element (232a, 232b, 232c, 232d, 232e) pass through the rotary body (21, 21a, 21b, 21c, 21d, 21e).

10. The ground lock apparatus (20, 20a, 20b, 20c, 20d, 20e) of claim 6, further comprising:
a base (11), the rotary body (21, 21a, 21b, 21c, 21d, 21e) being rotated with respect to the base (11).

## Patentansprüche

1. Bodenverriegelungsvorrichtung (20, 20a, 20b, 20c, 20d, 20e), die zum Verriegeln eines Rades eines Fahrzeugs planar auf einem Boden angeordnet ist, **dadurch gekennzeichnet, dass** sie aufweist:
einen Drehkörper (21, 21a, 21b, 21c, 21d, 21e) mit einer Ausnehmung (211, 211a, 211b, 211c), die tiefer als der Boden ist, um das Rad aufzunehmen;
eine Vertiefungsabdeckungseinheit (22, 22a, 22b, 22c, 22d), die mit dem Umfangsrand einer Öffnung der Ausnehmung (211, 211a, 211b, 211c) verbunden ist; und
eine Verriegelungseinheit (23, 23a, 23b, 23c, 23d, 23e), die derart ausgebildet ist, dass ein Teil der Verriegelungseinheit (23, 23a, 23b, 23c, 23d, 23e) sich durch das Rad erstreckt, nachdem das Rad in die Ausnehmung (211, 211a, 211b, 211c) gefallen ist, und die Dreheinheit gedreht wird.

2. Bodenverriegelungsvorrichtung (20, 20a, 20b, 20c, 20d, 20e) nach Anspruch 1, bei welcher der Drehkörper (21, 21a, 21b, 21c, 21d, 21e) ferner eine runde Abdeckung (212, 212a, 212b, 212c, 212e) aufweist, wobei die runde Abdeckung (212, 212a, 212b, 212c, 212e) und die Bodenfläche im Wesentlichen eben sind, und wobei die Öffnung der Ausnehmung (211, 211a, 211b, 211c) in der runden Abdeckung (212, 212, 212b, 212c, 212e) angeordnet ist.

3. Bodenverriegelungsvorrichtung (20, 20a, 20b, 20c, 20d, 20e) nach Anspruch 1, bei welcher die Vertiefungsabdeckungseinheit (22, 22a, 22b, 22c, 22d) ferner mindestens eine Abdeckungsplatte (221, 221a, 221b, 221c, 221e) und mindestens ein Antriebselement (222, 222a, 222b, 222c) aufweist, wobei die Abdeckungsplatte (221, 221a, 221b, 221c, 221e) mit dem Umfangsrand der Öffnung der Ausnehmung (211, 211a, 211b, 211c) verbunden ist, und das Antriebselement (222, 222a, 222b, 222c) entsprechend mit der Abdeckungsplatte (221, 221a, 221b, 221c, 221e) verbunden ist und die Abdeckungsplatte (221, 221a, 221b, 221c, 221e) zur Bewegung antreibt.

4. Bodenverriegelungsvorrichtung (20, 20a, 20b, 20c, 20d, 20e) nach Anspruch 1, bei welcher die Verriegelungseinheit (23, 23a, 23b, 23c, 23d, 23e) ferner ein erstes Verriegelungselement (231a, 231b, 231c, 231d, 231e) und ein zweites Verriegelungselement (232a, 232b, 232c, 232d, 232e) aufweist, und wobei sich das erste Verriegelungselement (231a, 231b, 231c, 231d, 231e) und/oder das zweite Verriegelungselement (232a, 232b, 232c, 232d, 232e) durch den Drehkörper (21, 21a, 21b, 21c, 21d, 21e) erstrecken.

5. Bodenverriegelungsvorrichtung (20, 20a, 20b, 20c, 20d, 20e) nach Anspruch 1, ferner mit:
einer Basis, wobei der Drehkörper (21, 21a, 21b, 21c, 21d, 21e) in Bezug auf die Basis (11) gedreht wird.

6. Bodenverriegelungsvorrichtung (20, 20a, 20b, 20c, 20d, 20e) zum Verriegeln eines Rades eines Fahrzeugs, **dadurch gekennzeichnet, dass** sie aufweist:
einen Drehkörper (21, 21a, 21b, 21c, 21d, 21e) mit einer Ausnehmung (211, 211a, 211b, 211c) zum Aufnehmen des Rades;
eine Vertiefungsabdeckungseinheit (22, 22a, 22b, 22c, 22d), die mit dem Umfangsrand einer Öffnung der Ausnehmung (211, 211a, 211b, 211c) verbunden ist; und
eine Verriegelungseinheit (23, 23a, 23b, 23c, 23d, 23e), wobei, nachdem der Drehkörper (21, 21a, 21b, 21c, 21d, 21e) sich aus einer ersten Position in eine zweite Position gedreht hat, die Verriegelungseinheit (23, 23a, 23b, 23c, 23d, 23e) mit dem Drehkörper (21, 21a, 21b, 21c, 21d, 21e) zusammengreift, um den Drehkörper (21, 21a, 21b, 21c, 21d, 21e) an einer Rückkehr in die erste Position zu hindern.

7. Bodenverriegelungsvorrichtung (20, 20a, 20b, 20c, 20d, 20e) nach Anspruch 6, bei welcher der Drehkörper (21, 21a, 21b, 21c, 21d, 21e) ferner eine runde Abdeckung (212, 212a, 212b, 212c, 212e) aufweist, und wobei die Öffnung der Ausnehmung (211, 211a, 211b, 211c) in der runden Abdeckung (212, 212a, 212b, 212c, 212e) angeordnet ist.

8. Bodenverriegelungsvorrichtung (20, 20a, 20b, 20c, 20d, 20e) nach Anspruch 6, bei welcher die Vertiefungsabdeckungseinheit (22, 22a, 22b, 22c, 22d) ferner mindestens eine Abdeckungsplatte (221, 221a, 221b, 221c, 221e) und mindestens ein Antriebselement (222, 222a, 222b, 222c) aufweist, wobei die Abdeckungsplatte (221, 221a, 221b, 221c, 221e) mit dem Umfangsrand der Öffnung der Ausnehmung (211, 211a, 211b, 211c) verbunden ist, und das Antriebselement (222, 222a, 222b, 222c) entsprechend mit der Abdeckungsplatte (221, 221a, 221b, 221c, 221e) verbunden ist und die Abdeckungsplatte (221, 221a, 221b, 221c, 221e) zur Bewegung antreibt.

9. Bodenverriegelungsvorrichtung (20, 20a, 20b, 20c, 20d, 20e) nach Anspruch 6, bei welcher die Verriegelungseinheit (23, 23a, 23b, 23c, 23d, 23e) ferner ein erstes Verriegelungselement (231a, 231b, 231c, 231d, 231e) und ein zweites Verriegelungselement (232a, 232b, 232c, 232d, 232e) aufweist, und wobei sich das erste Verriegelungselement (231a, 231b, 231c, 231d, 231e) und das zweite Verriegelungselement (232a, 232b, 232c, 232d, 232e) durch den Drehkörper (21, 21a, 21b, 21c, 21d, 21e) erstrecken.

10. Bodenverriegelungsvorrichtung (20, 20a, 20b, 20c, 20d, 20e) nach Anspruch 6, ferner mit:
einer Basis (11), wobei der Drehkörper (21, 21a, 21b, 21c, 21d, 21e) in Bezug auf die Basis (11) gedreht wird.

## Revendications

1. Appareil de verrouillage au sol (20, 20a, 20b, 20c, 20d, 20e), disposé de façon plane sur un sol pour verrouiller une roue d'un véhicule, **caractérisé en ce qu'**il comprend :
un corps rotatif (21, 21a, 21b, 21c, 21d, 21e), ayant un évidement (211, 211a, 211b, 211c) plus bas que le sol pour recevoir la roue ;
une unité de couverture de fossé (22, 22a, 22b, 22c, 22d), reliée à la périphérie d'une ouverture de l'évidement (211, 211a, 211b, 211c) ; et
une unité de verrouillage (23, 23a, 23b, 23c, 23d, 23e), configurée pour qu'une partie de l'unité de verrouillage (23, 23a, 23b, 23c, 23d, 23e) traverse la roue après que la roue tombe dans l'évidement (211, 211a, 211b, 211c) et que l'unité rotative est mise en rotation.

2. Appareil de verrouillage au sol (20, 20a, 20b, 20c, 20d, 20e) selon la revendication 1, dans lequel le corps rotatif (21, 21a, 21b, 21c, 21d, 21e) comprend en outre une couverture ronde (212, 212a, 212b, 212c, 212e), la couverture ronde (212, 212a, 212b, 212c, 212e) et la surface au sol sont sensiblement plates, et l'ouverture de l'évidement (211, 211a, 211b, 211c) est située au niveau de la couverture ronde (212, 212a, 212b, 212c, 212e).

3. Appareil de verrouillage au sol (20, 20a, 20b, 20c, 20d, 20e) selon la revendication 1, dans lequel l'unité de couverture de fossé (22, 22a, 22b, 22c, 22d) comprend en outre au moins une feuille de couverture (221, 221b, 221c, 221f) et au moins un élément d'entraînement (222, 222a, 222b, 222c), la feuille de couverture (221, 221b, 221c, 221f) est reliée à la périphérie de l'ouverture de l'évidement (211, 211a, 211b, 211c), et l'élément d'entraînement (222, 222a, 222b, 222c) est relié de façon correspondante à la feuille de couverture (221, 221b, 221c, 221f) et entraîne le déplacement de la feuille de couverture (221, 221b, 221c, 221f).

4. Appareil de verrouillage au sol (20, 20a, 20b, 20c, 20d, 20e) selon la revendication 1, dans lequel l'unité de verrouillage (23, 23a, 23b, 23c, 23d, 23e) comprend en outre un premier élément de verrou (231a, 231b, 231c, 231d, 231e) et un deuxième élément de verrou (232a, 232b, 232c, 232d, 232e), et le premier élément de verrou (231a, 231b, 231c, 231d, 231e) et/ou le deuxième élément de verrou (232a, 232b, 232c, 232d, 232e) traversent le corps rotatif (21, 21a, 21b, 21c, 21d, 21e).

5. Appareil de verrouillage au sol (20, 20a, 20b, 20c, 20d, 20e) selon la revendication 1, comprenant en outre :
une base, le corps rotatif (21, 21a, 21b, 21c, 21d, 21e) étant mis en rotation par rapport à la base (11).

6. Appareil de verrouillage au sol (20, 20a, 20b, 20c, 20d, 20e), destiné à verrouiller une roue d'un véhicule, **caractérisé en ce qu'**il comprend :
un corps rotatif (21, 21a, 21b, 21c, 21d, 21e), ayant un évidement (211, 211a, 211b, 211c) pour recevoir la roue ;
une unité de couverture de fossé (22, 22a, 22b, 22c, 22d), reliée à la périphérie d'une ouverture de l'évidement (211, 211a, 211b, 211c) ; et
une unité de verrouillage (23, 23a, 23b, 23c, 23d, 23e), dans lequel après que le corps rotatif (21, 21a, 21b, 21c, 21d, 21e) tourne d'une première position à une deuxième position, l'unité de verrouillage (23, 23a, 23b, 23c, 23d, 23e) s'engage avec le corps rotatif (21, 21a, 21b, 21c, 21d, 21e) pour empêcher le corps rotatif (21, 21a, 21b, 21c, 21d, 21e) de retourner à la première position.

7. Appareil de verrouillage au sol (20, 20a, 20b, 20c, 20d, 20e) selon la revendication 6, dans lequel le corps rotatif (21, 21a, 21b, 21c, 21d, 21e) comprend en outre une couverture ronde (212, 212a, 212b, 212c, 212e), et l'ouverture de l'évidement (211, 211a, 211b, 211c) est située au niveau de la couverture ronde (212, 212a, 212b, 212c, 212e).

8. Appareil de verrouillage au sol (20, 20a, 20b, 20c, 20d, 20e) selon la revendication 6, dans lequel l'unité de couverture de fossé (22, 22a, 22b, 22c, 22d) comprend en outre au moins une feuille de couverture (221, 221b, 221c, 221f) et au moins un élément d'entraînement (222, 222a, 222b, 222c), la feuille de couverture (221, 221b, 221c, 221f) est reliée à la périphérie de l'ouverture de l'évidement (211, 211a, 211b, 211c), et l'élément d'entraînement (222, 222a, 222b, 222c) est relié de façon correspondante à la feuille de couverture (221, 221b, 221c, 221f) et entraîne ledit déplacement de la feuille de couverture (221, 221b, 221c, 221f).

9. Appareil de verrouillage au sol (20, 20a, 20b, 20c, 20d, 20e) selon la revendication 6, dans lequel l'unité de verrouillage (23, 23a, 23b, 23c, 23d, 23e) comprend en outre un premier élément de verrou (231a, 231b, 231c, 231d, 231e) et un deuxième élément de verrou (232a, 232b, 232c, 232d, 232e), et le premier élément de verrou (231a, 231b, 231c, 231d, 231e) et/ou le deuxième élément de verrou (232a, 232b, 232c, 232d, 232e) traversent le corps rotatif (21, 21a, 21b, 21c, 21d, 21e).

10. Appareil de verrouillage au sol (20, 20a, 20b, 20c, 20d, 20e) selon la revendication 6, comprenant en outre :
une base (11), le corps rotatif (21, 21a, 21b, 21c, 21d, 21e) étant mis en rotation par rapport à la base (11).
